# EUROPEAN PATENT APPLICATION

(11) **EP 0 699 642 A2**
(43) Date of publication of application: **06.03.1996**
(21) Application number: 95305968.0
(22) Date of filing: 25.08.1995
(51) Int. Cl.: C04B 35/5835, C04B 35/5831, B01J 3/06

(54) **Whisker or fiber reinforced polycrystalline cubic boron nitride and diamond**

(30) Priority: 29.08.1994 US 297375
(71) Applicant: SMITH INTERNATIONAL, INC., Houston, Texas 77032 (US)
(72) Inventor: Miess, David, The Woodlands, Texas 77381 (US); Collier, Matt, Provo, Utah 84604 (US); Rai, Ghanshyam, Sandy, Utah 84052 (US)
(74) Representative: Parry, Christopher Stephen

(57) **Abstract**

Polycrystalline cubic boron nitride or diamond compacts are permeated with whiskers and/or fibers for increased abrasive qualities, fracture toughness, and chipping resistance. The whiskers and/or fibers may comprise materials such as boron, carbon, and those metal oxides, metal borides, metal nitrides, metal carbides, and metal carbonitrides which do not melt at the sintering temperature and pressure of polycrystalline cubic boron nitride and diamond. A polycrystalline cubic boron nitride compact is made by mixing 70 weight percent cubic boron nitride grains with 15 weight percent titanium nitride coated silicon carbide whiskers and 15 weight percent titanium nitride grains, and sintering at a pressure of 75 kilobars and a temperature of 1400°C for 15 minutes.

## Description

This invention relates to wear and impact resistant materials for use in machining tools, abrasives, wire dies, wear parts, and the like. Specifically, it relates to strands of fiber or whisker material permeating the structure of sintered polycrystalline cubic boron nitride (cBN) and diamond. The terms "fiber" and "whisker" used herein both refer to strands of material approximately cylindrical in shape, and having a length considerably longer than their diameter. However, the term "whisker" will be used to denote a single crystal strand, whereas "fiber" denotes a strand of bonded polycrystalline structure.

The creation of ultra hard, wear resistant materials with diamond and cubic boron nitride crystals is known. Although diamond is harder than cBN, cBN has advantages in the cutting and machining of ferrous metals because the carbon in the diamond will react with an iron workpiece to a greater extent than the boron and nitrogen in a cBN crystal. Cubic boron nitride has other desirable properties such as thermal stability, high thermal conductivity, good impact resistance, and a low coefficient of friction in contact with a workpiece. For these reasons, cBN is widely used as well as diamond in machining applications.

Because polycrystalline composites of diamond or cBN have advantages over single crystals of diamond or cBN, techniques have been developed to bind together large numbers of small crystals into polycrystalline composites of useful size, commonly known as "compacts". The diamond and cBN particles used as starting material can be either natural or manufactured using known high pressure techniques. The basic processes for creating polycrystalline compacts of both diamond and cBN are similar.

Polycrystalline diamond is created by mixing a large number of relatively small diamond crystals together, and subjecting them to high temperature and pressure so that intercrystalline bonding occurs. Generally, a catalyst or binder material is added to assist intercrystalline bonding. This process is known as "sintering". Metals such as cobalt, iron, nickel, manganese, and the like, and alloys of these metals have been used as a catalyst matrix.

Polycrystalline boron nitride is also made by sintering in the presence of binder and catalyst materials. Although polycrystalline cBN compacts can be formed without catalyst materials, boron and nitrogen oxides which form on the outside of the individual cBN grains make it difficult to do so. Many different materials have been used as catalysts and binders to assist the formation of cBN intercrystalline bonds. As with diamond, metals and their alloys can be used. Cobalt is a common metal to use in the creation of sintered compacts.

It is desirable for compacts to have good abrasive as well as fracture toughness qualities. Resistance to chipping is also desirable. As various compact materials, catalysts, etc. affect these important parameters differently, it is desirable to find material combinations and structures that provide the best possible performance for a variety of applications.

Polycrystalline cubic boron nitride and polycrystalline diamond are permeated with whiskers and/or fibers. The whisker and/or fiber material is preferably selected from the group consisting of boron, carbon, silicon carbide, titanium carbide, and titanium nitride, and other metal oxides, metal borides, metal nitrides, metal carbides, and metal carbonitrides which do not melt at the sintering temperature and pressure of cubic boron nitride or diamond. In addition, the whiskers or fibers may be coated with one or more of titanium carbide, titanium nitride, tungsten, titanium carbonitride, or aluminum oxide.

Also, a method for forming polycrystalline cubic boron nitride and polycrystalline diamond compacts comprises the steps of mixing boron nitride or diamond grains with whiskers and/or fibers and with a catalyst, and subjecting the mixture to elevated temperature and pressure conditions where the cubic boron nitride or diamond is thermodynamically stable and where the whiskers and/or fibers remain predominantly intact. The whiskers and/or fibers in the mixing step comprise material selected from the group consisting of boron, carbon, silicon carbide, titanium carbide, titanium nitride, and other metal oxides, metal borides, metal nitrides, metal carbides, and metal carbonitrides which do not melt at the sintering temperature and pressure of cubic boron nitride or diamond. In addition, the whiskers and/or fibers may be coated with one or more of titanium carbide, titanium nitride, tungsten, titanium carbonitride, or aluminum oxide.

Specifically, in a method of forming a polycrystalline cubic boron nitride compact the mixing step comprises mixing cubic boron nitride grains with 5 to 30 weight percent titanium nitride coated silicon carbide whiskers and 5 to 15 weight percent titanium nitride grains. The cubic boron nitride grains may be approximately 2 to 3 micrometers in diameter, the whiskers approximately 0.7 to 1.2 micrometers in diameter and 10 micrometers long, and the titanium nitride grains approximately 1 to 1.2 micrometers in diameter.

In a preferred embodiment of this invention, cBN crystals of approximately 2 to 3 micrometer diameter are heat treated in a non-oxidizing and preferably reducing atmosphere at a temperature of about 900-950°C, for a duration of about 1 to 2 hours. The non-oxidizing atmosphere may be 10⁻⁴ to 10⁻⁶ Torr vacuum, hydrogen, or ammonia. The purpose of the initial heat treatment is to remove any adsorbed water vapor, oxides, and other volatile impurities that may interfere with intercrystalline cBN bonding during the sintering process. Heat treating in ammonia is preferred since that may help avoid loss of nitrogen and a resulting non-stoichiometry in the boron nitride.

Whiskers of silicon carbide are also prepared. The whiskers are cylindrically shaped crystals, grown axially along a central screw dislocation. A suitable size is approximately 10 micrometers long, and about 0.7 to 1.2 micrometer in diameter. Such whiskers are available commercially in which approximately all of the whiskers in the preparation are single crystals as opposed to amorphous fibers.

Preferably, the whiskers are also coated with a material which will act as a catalyst and sintering aid. Titanium nitride is the preferred material. This coating can be created via chemical vapor deposition, a well known technique for depositing a film of materials onto a surface. One may also coat the whiskers chemically from a solution of titanium chloride. Deposited titanium chloride is hydrolyzed to form TiO₂. This is then nitrided to form the titanium nitride coating. The deposition of thin layers of titanium nitride onto single crystal whiskers of size suitable for incorporation into cBN compacts is a commercially available process. A suitable coating thickness is in the order of a few tens of nanometers. Both coated and uncoated fibers and whiskers are available from Advanced Refractory Technologies Inc. in Buffalo, New York.

The heat treated cBN crystals are then combined with the coated whiskers. As a catalyst, grains of titanium nitride of approximately 1 to 1.2 micrometer diameter are also added. In an exemplary embodiment, the coated whiskers and titanium nitride grains each comprise approximately 15% of the mixture by weight, with the cBN crystals comprising the other 70%. The mixture is then thoroughly blended together with tungsten carbide balls and alcohol in a nitrogen charged ball mill. This mixture is compacted into preforms having approximately the shape of the finished product and heat treated in a non-oxidizing atmosphere for about four hours at a temperature in the range of approximately 600 to 950°C. As with the cBN grain heat pre-treatment, the non-oxidizing atmosphere may be 10⁻⁴ to 10⁻⁶ Torr vacuum, hydrogen, or ammonia. This step further assists in the reduction of boron oxides on the surface of the cBN grains which can interfere with the formation of cBN intercrystalline bonds.

When creating a cBN compact for use as a cutting tool, it is advantageous to form a complex compact which comprises a polycrystalline cBN hard layer and a tungsten carbide substrate integral to it. The tungsten carbide substrate is "cemented" by sintering grains of tungsten carbide with a cobalt binder. Methods for forming cemented tungsten carbide are well known. The thickness of the cBN layer in the composite compact varies according to the cutting tool to be made, but is generally more than about 0.5 millimeter. A tungsten carbide substrate is desirable since it has high hardness, heat conductivity, and toughness. The thickness of the cemented tungsten carbide substrate is generally more than about two millimeters. Typical embodiments have a cBN layer thickness of about 0.8 millimeters on a substrate with a thickness of either 2.4 or 4 millimeters. A composite compact is created by placing a preform onto a cemented tungsten carbide substrate, and loading them into a closed container. Careful selection of container materials minimizes infiltration of undesirable materials into the compact and protects it from oxidation and the like. Molybdenum, niobium, titanium, tungsten, and zirconium have been found to be suitable. A preferred container material is niobium.

A closed niobium container enclosing the substrate and preform to be sintered is surrounded by a pressure transmitting medium such as salt, talc, or the like. The container and pressure transmitting medium are placed in a graphite or metallic heater surrounded by a pressure transmitting and gasket forming material such as pyrophyllite and placed into the chamber of a suitable high pressure, high temperature apparatus. Such apparatus are well known to those skilled in the art.

After pressure in excess of about 20 kilobars is applied to bring the mixture into the region of cBN thermodynamic stability, electrical resistance heating is applied to sinter the compact to maximum density. A suitable cycle comprises a pressure of about 75 kilobars at a temperature of about 1400°C for 15 minutes. After sintering is complete, the heating current is decreased and the sample is cooled below about 200°C, after which the applied pressure is removed and the container is taken from the high pressure press.

It is believed that the following events occur during the sintering process. First, when the melting point of the cobalt binder phase in the cemented tungsten carbide substrate is reached, the cobalt infiltrates somewhat into the polycrystalline cBN material, which bonds the cBN layer to the tungsten carbide substrate. Also, the high temperature and pressure cause the cBN grains to form intercrystalline bonds with each other, and cause the titanium nitride grains to form diffusion bonds with the titanium nitride whisker coating and with the cBN grains. Although the 3000°C melting point of the titanium nitride is not reached, migration of titanium nitride into the cBN and into the whisker coating causes the mixture to coalesce into a solidly bound polycrystalline mass.

It is possible within the scope of this invention to practice a wide variety of compositions and temperature-pressure conditions in cycles which will create the desired fibrous microstructure. The ratio of whiskers to cBN grains to binder can be varied over a wide range. No minimum whisker content is required, although fewer whiskers result in a compact having less of the desireable qualities the whiskers provide. The cBN content of the compact, however, should be at least 60 weight percent. Lower cBN content results in a compact lacking in hardness and other important compact characteristics. Therefore, whisker content may comprise anywhere from almost zero to about 30% of the total weight of the cBN compact. The additional catalyst material would generally comprise 5 to 15% of the total weight, with the proviso that the sum of the whisker and catalyst content not exceed 40 weight percent of the compact.

Also, whiskers and binders of various compositions may be used. Although titanium nitride performs well as both a catalyst and whisker coating due to its relative thermodynamic stability as compared with carbide catalyst materials, it is not necessary to use titanium nitride. It appears, however, to be most suitable to use the same material to coat the whiskers as is used for the catalyst. This may assist the formation of diffusion bonds between the cBN grains, binder grains, and the whiskers.

As different whisker materials, whisker coatings, and binders have various strength and chemical reactivity characteristics, compacts with variations in hardness, crack resistance, etc. are produced by varying the composition of the compact. Whiskers may, for instance, be comprised of titanium carbide or titanium nitride, as well as silicon carbide. In fact, any metal oxides, metal borides, metal nitrides, metal carbides, and metal carbonitrides which do not melt at the sintering temperature and pressure of polycrystalline cubic boron nitride are suitable. In addition to titanium nitride, the whiskers or fibers might be coated with titanium carbide, tungsten, titanium carbonitride, or aluminum oxide, or not coated at all.

Variations in catalyst material could also be made. Aluminum nitride might be used, or aluminum oxide grains could be added. It may, in fact, be desirable to coat the catalyst grains with various alternative materials instead of or in addition to coating the whiskers. Cobalt aluminide has also been used as a cBN binder, and could be used here as well. Some difficulties may be expected, however, as excessive cobalt tends to react with the whiskers and cause them to melt into the matrix, thereby losing the desired microstructure.

This cobalt induced whisker melting forces careful consideration of catalyst materials when making a compact with a cemented tungsten carbide substrate. This is because cobalt is commonly used as a binder material in the substrate. If the catalyst material contains titanium, such as titanium nitride or titanium carbonitride, the catalyst will inhibit cobalt migration into the polycrystalline cBN. Although some cobalt infiltration is required to bond the polycrystalline cBN matrix to the substrate, a titanium bearing catalyst will limit this to a region approximately two microns thick at the interface between the polycrystalline cBN and the tungsten carbide substrate.

Throughout this consideration of alternative materials, it is important to note that a fibrous microstructure in a polycrystalline cBN or diamond compact has not previously been achieved, even though materials of the discussed chemical compositions have been used in the sintered compact art.

Grain and whisker sizes may also be varied. To assist maximum intercrystalline bonding of the cBN and appropriate permeation of whiskers throughout the polycrystalline structure, a whisker diameter smaller than the cBN crystal grain size is preferable. Since finer grain compacts give greater impact resistance, perform suitably for aggressive cutting applications, and give smoother surfaces in finishing applications, small cBN grains, i.e. two to three micrometer diameter, are preferred. A single crystal whisker diameter is typically slightly less than one micrometer. In addition, single crystal whiskers have high strength and fracture toughness, thereby enhancing fracture toughness in compacts in which the whiskers are embedded. Hence, single crystal whiskers are a preferred ingredient. However, non-single-crystal fibers made of materials such as carbon or boron might also be used. High strength pyrolized carbon and boron fibers are commercially available. Since these fibers have larger diameters than single crystal whiskers, optimum permeation requires the use of larger cBN grains, which can reduce the abrasive qualities of the resulting tool.

The process described above is applicable to the creation of sintered diamond compacts, where diamond crystals are substituted for boron nitride grains. Although cobalt is commonly used as a catalyst material for sintered diamond, it is preferable to use another material in creating a whisker permeated sintered diamond compact, because as described above, cobalt may adversely affect whisker integrity.

## Claims

1. Ultra hard material permeated with whiskers and/or fibers wherein the ultra hard material is selected from the group consisting of polycrystalline cubic boron nitride and polycrystalline diamond.

2. The material according to Claim 1 wherein the whiskers and/or fibers are coated with a material selected from the group consisting of titanium carbide, titanium nitride, tungsten, titanium carbonitride, and aluminum oxide.

3. The material according either one of Claims 1 or 2 wherein the whiskers and/or fibers comprise a material selected from the group consisting of boron, carbon, and those metal oxides, metal borides, metal nitrides, metal carbides, and metal carbonitrides which do not melt at the sintering temperature and pressure of polycrystalline cubic boron nitride.

4. The material according to any one of the preceding claims wherein the whisker and/or fiber material is selected from the group consisting of silicon carbide, titanium carbide, titanium nitride, boron, and carbon.

5. The material according to any one of the preceding claims comprising polycrystalline cubic boron nitride permeated with titanium nitride coated silicon carbide whiskers.

6. A method for forming ultra hard compacts of polycrystalline cubic boron nitride or polycrystalline diamond comprising:
mixing boron nitride or diamond grains with whiskers and/or fibers and with a catalyst; and
subjecting the mixture to elevated temperature and pressure conditions wherein the high pressure form of the ultra hard material is thermodynamically stable and the whiskers and/or fibers remain predominantly intact.

7. The method according to Claim 6 wherein the step of coating the whiskers and/or fibers with a material selected from the group consisting of titanium carbide, titanium nitride, tungsten, titanium carbonitride, and aluminum oxide is performed prior to mixing.

8. The method according to either one of Claims 6 or 7 wherein the mixing step comprises mixing whiskers and/or fibers comprising material selected from the group consisting of boron, carbon, and those metal oxides, metal borides, metal nitrides, metal carbides, and metal carbonitrides which do not melt at the sintering temperature and pressure of the ultra hard material.

9. The method according to any one of Claims 6, 7 or 8 wherein the mixing step comprises mixing whiskers and/or fibers comprising material selected from the group consisting of silicon carbide, titanium carbide, titanium nitride, boron, and carbon.

10. The method according to any one of Claims 6, 7, 8 or 9 wherein the step of coating the whiskers and/or fibers with a material selected from the group consisting of titanium carbide, titanium nitride, tungsten, titanium carbonitride, and aluminum oxide is performed prior to mixing.

11. The method according to any one of Claims 6, 7, 8, 9 or 10 wherein the coating step comprises coating silicon carbide whiskers with titanium nitride, and the mixing step comprises mixing cubic boron nitride grains with 1 to 30 weight percent of the titanium nitride coated silicon carbide whiskers and 5 to 15 weight percent titanium nitride grains as a sintering aid, wherein the total weight percent of whiskers and sintering aid does not exceed 40 weight percent.

12. The method according to any one of Claims 6, 7, 8, 9, 10 or 11 wherein the cubic boron nitride grains are approximately 2 to 3 micrometers in diameter, the whiskers are approximately 0.7 to 1.2 micrometers in diameter and approximately 10 micrometers long, and the titanium nitride grains are approximately 1 to 1.2 micrometers in diameter.
